# NEUE EUROPÄISCHE PATENTSCHRIFT

(11) **EP 0 976 862 B2**
(45) Veröffentlichungstag und Bekanntmachung des Hinweises auf die Entscheidung über den Einspruch: **30.06.2010**
(45) Hinweis auf die Patenterteilung: 13.10.2004
(21) Anmeldenummer: 99114773.7
(22) Anmeldetag: 28.07.1999
(51) Int. Cl.: D06F 39/00, G05B 19/10

(54) **Verfahren und Vorrichtung zum Einstellen eines Betriebsprogramms eines programmgesteuerten Haushaltgeräts**
Method and apparatus to set a control program stored in a program-controlled domestic appliance
Procédé et dispositif pour régler un programme de contrôle installé dans un appareil domestique pourvu d'un tel programme

(30) Priorität: 29.07.1998 DE 19834230
(43) Veröffentlichungstag der Anmeldung: 02.02.2000
(73) Patentinhaber: BSH Bosch und Siemens Hausgeräte GmbH, 81739 München (DE)
(72) Erfinder: Wilsdorf, Gerd, 82140 Olching (DE); Geyer, Johannes, 81667 München (DE); Ossler, Jörg, 80469 München (DE); Moschütz, Harald, Dipl.-Ing., 14979 Grossbeeren (DE); Sechelmann, Christian Eric, Dr.-Ing., 14055 Berlin (DE); Ludenia, Thomas, Dipl.-Ing., 14612 Falkensee (DE); Röhl, Marianne, Dipl.-Oec-troph., 14052 Berlin (DE)

(56) Entgegenhaltungen:
- EP-A- 0 482 578
- EP-A- 0 740 112
- EP-A- 0 818 942
- EP-A- 0 844 325
- DE-A- 4 004 097
- DE-A- 19 600 555
- DE-A- 19 606 115
- DE-A- 19 615 357
- DE-A- 19 832 757
- DE-U- 29 714 901
- JP-A- 57 144 827
- US-A- 4 914 277
- US-A- 5 279 134

## Beschreibung

Die Erfindung betrifft ein Verfahren zum Einstellen eines Betriebsprogramms aus mehreren Betriebsprogrammparametem eines programmgesteuerten Haushaltgeräts mit den weiteren Merkmalen des Oberbegriffs des Anspruchs 1 bzw. des Oberbegriffs des Anspruchs 2.

Bei programmgesteuerten Haushaltgeräten muß wenigstens ein gewünschtes Betriebsprogramm ausgewählt werden und müssen oder können abhängig vom Betriebsprogramm mehrere zusätzliche Einstellungen vorgenommen werden. Bei Waschmaschinen können solche Einstellungen als Betriebsprogramm beispielsweise Buntwäsche, Feinwäsche oder Kochwäsche und als zusätzliche Einstellungen die Waschtemperatur, die Schleuderdrehzahl oder Zusatzeinstellungen sein. Als Zusatzeinstellungen kommen bei Waschmaschinen beispielsweise eine Vorwäsche oder ein vorheriges Einweichen der Wäsche, das Waschen mit erhöhter Wassermenge oder eine zeitliche Abgekürzung des Waschprogramms in Frage.

Bei den bekannten Haushaltgeräten werden für die Einstellung des Betriebsprogramms beziehungsweise der Betriebsprogrammparameter Dreh- oder Druckschalter verwendet, wobei in der Regel für Einstellungen, die nur zwei Einstellungsmöglichkeiten umfassen, wie beispielsweise im Fall von Waschmaschinen "mit Vorwäsche" oder "ohne Vorwäsche", Druckschalter und bei mehreren Einstellungsmöglichkeiten Drehschalter eingesetzt werden. Welche Einstellung mit den einzelnen Bedienelementen vorgenommen werden kann, ergibt sich aus Symbolen oder Beschriftungen, die den Bedienelementen zugeordnet sind. Zur Anzeige der aktuellen Einstellung weisen Drehschalter meist eine Markierung auf, der eine feststehende Skala mit den verschiedenen Einstellungsmöglichkeiten auf der Bedienblende des Haushaltgeräts zugeordnet ist, wobei die Markierung zusammen mit dem Drehschalter verdreht wird und auf die vorgenommene Einstellung der Skala zeigt. Bei Druckschaltern läßt sich die aktuelle Einstellung meist nur aus dem Zustand des Schalters erschließen, der in niedergedrückter Stellung in der Regel in der Ein-Stellung ist und in der Aus-Stellung meist weiter herausragt, so daß unter Umständen die aktuelle Einstellung nicht eindeutig angezeigt wird. Zur Unterstützung der Erkennbarkeit sind auch zusätzliche Betätigungsanzeigen bekannt.

Weiterhin ist aus der DE 28 24 973 A1 ein Haushaltgerät bekannt, dessen Bedienvorrichtung eine vorprogrammierte Steuerung und eine alpha-numerische Anzeigeeinrichtung mit transparenten Berührungssensoren auf der Anzeigefläche aufweist, wobei der Bedienperson über die Anzeige Programmvorschläge angeboten werden, die durch Berühren der Sensoren auf der Anzeigeeinrichtung ausgewählt werden können. In diesem Fall ergibt sich die Einstellung, die mit den transparenten Berührungssensoren vorgenommen werden kann, aus der aktuellen Anzeige in der darunter befindlichen Anzeigeeinrichtung.

Die vorgenannten Haushaltgeräte beziehungsweise deren Bedienvorrichtungen weisen insbesondere die folgenden Nachteile auf. Die Anzeige der aktuellen Einstellung erfolgt sowohl bei Dreh- als auch bei Druckschaltern durch den Schaiter seibst oder durch eine Skala oder Markierung, die sich in seiner unmittelbaren Nähe befindet. Da die verschiedenen Schalter auf der Bedienfläche des Haushaltgeräts wegen ihres Platzbedarfs verteilt angeordnet sind, führt dies dazu, daß zum Ablesen der gesamten Betriebsprogrammeinstellungen ein großer Bereich der Bedienfläche überschaut werden muß, um von den verschiedenen Schaltern die Einstellung abzulesen. Dies ist zum einen umständlich und führt zum anderen zu einem erhöhten Risiko von Fehleinstellungen, da durch die räumliche Verteilung der Einstellungsanzeigen leicht eine aus dem Blick gerät und übersehen wird. Zusätzlich ist der Platz um die Schalter herum sehr klein und läßt wenig Raum für ausführliche oder auch nur sinnfällige Hinweise auf die Einstellung, die mit dem jeweiligen Bedienelement geändert werden kann, und auf dessen aktuelle Einstellung, so daß die Gefahr von mißverständlichen Angaben besteht. Diese Gefahr herrscht insbesondere bei Druckschaltern, bei denen der Unterschied zwischen den Schaltstellungen in der Regel unauffällig ist. Aber auch Drehschalter mit vielen Schaltstellungen lassen wegen der geringen Winkeldifferenzen zwischen benachbarten Drehstellungen und möglichen Parallaxenfehlem Ablesefehler zu.

Bei der aus der DE 28 24 973 A1 bekannten Bedienvorrichtung kann es dagegen leicht vorkommen, daß die Lesbarkeit der Anzeigeeinrichtung durch die Verschmutzung der darüber angeordneten transparenten Berührungssensoren abnimmt, da diese von der Bedienperson für jeden Einstellungsvorgang berührt werden müssen. Darüber hinaus ergibt sich aus transparenten, für die Bedienperson wenigstens unauffälligen Bedienelementen sehr schlecht die Art und Weise, in der sie betätigt werden müssen. Ohne Studium der Bedienungsanleitung oder ausführliche Hinweise auf der Bedienblende mit den damit verbundenen Nachteilen für die Gestaltung des Haushaltgeräts wird für eine Bedienperson eine richtige Betätigung einer solchen Bedienvorrichtung in der Regel nicht möglich sein.

Außerdem ist noch ein Mikrowellenofen bekannt (EP 0 482 578 A1), bei dem in mehreren Anzeigedisplays je ein Programm angeboten wird, das durch eine daneben angeordnete Taste ausgewählt werden kann. Diese Anordnung erfordert bei einer Vielzahl von herstellerseits vorgesehenen Programmen, die sich möglicherweise nur durch unterschiedliche Werte für einen einzigen Parameter des Programmm unterscheiden, einen großen apparatetechnischen Aufwand und einen enormen Platzbedarf auf einer Bedienblende durch eine hohe Zahl von Displays und Bedienelementen (hier Tasten). Eine solche Anordnung kann nicht sehr übersichtlich sein, auch wenn jedes einzelne Display für eine gute Lesbarkeit eine genügende Größe aufweist.

Der Erfindung liegt die Aufgabe zugrunde, ein Verfahren der eingangs genannten Art für die Einstellung eines Betriebsprogramms aus mehreren Betriebsprogrammparametern eines programmgesteuerten Haushaltgeräts zu schaffen, bei dem das Betriebsprogramm oder ein oder mehrere Betriebsprogrammparameter klar überschaubar und unmißverständlich angezeigt werden können und einfach möglichst schnell und sicher mit einem hohen Maß an Bedienfreundlichkeit eingestellt werden können.

Erfindungsgemäß wird diese Aufgabe durch ein Verfahren mit den Merkmalen des Anspruchs 1 bzw. des Anspruchs 2 gelöst.

Auf diese Weise kann ein Betriebsprogramm und/oder dessen Betriebsparameter einfach und möglichst schnell ausgewählt bzw. eingestellt werden, wobei zugleich das eingestellte Betriebsprogramm und/oder dessen aktuelle Parameter in einer Anzeigeeinrichtung klar dargestellt werden und wobei sich das Betriebsprogramm und/oder die Einstellungen leicht und auf sinnfällige Weise durch wenigstens ein optisch zugeordnetes Bedienelement einstellen lassen. Mit der erfindungsgemäßen Lösung lassen sich die Vorteile einer Anzeigeeinrichtung, Informationen klar und deutlich und insbesondere auch im Klartext darzustellen, mit denen der üblichen Bedienelemente wie beispielsweise Druck- oder Drehschalter kombinieren, bei denen sich beispielsweise die Art der Betätigung für eine Bedienperson sinnfällig aus dessen Gestaltung ergibt, so daß die Bedienfreundlichkeit erheblich erhöht wird. Da die Zuordnung des Bedienelements zu dem damit einzustellenden Betriebsprogramm beziehungsweise dem damit einzustellenden Betriebsprogrammparameter bereits durch die Anordnung eindeutig ist, kann auf entsprechende Hinweise am Bedienelement selbst wie beispielsweise Symbole oder Beschriftungen verzichtet werden, so daß die Bedienblende wesentlich übersichtlicher und somit bedienfreundlicher gestaltet werden kann.

In Verlängerung der Zeilen der Anzeigeeinrichtung ist jeweils ein Bedienelement angeordnet, wenn in der betreffenden Zeile nur ein Betriebsprogramm oder Betriebsprogrammparameter angezeigt wird. In diesem Fall sind die Bedienelemente zweckmäßigerweise links oder rechts neben der Anzeigeeinrichtung untereinander angeordnet.

In einer Zeile können aber auch zwei Betriebsprogramme beziehungsweise zwei Betriebsprogrammparameter hintereinander am Anfang beziehungsweise am Ende der Zeile angezeigt werden. Um in diesem Fall eine Auswahl oder Einstellung vornehmen zu können, ist in Verlängerung dieser Zeile links und rechts neben der Anzeigeeinrichtung jeweils ein Bedienelement angeordnet. Die Bedienelemente beiderseits der Anzeigeeinrichtung sind entsprechend ihrer Anordnung dem am Anfang oder dem am Ende der Zeile angezeigten Betriebsprogramm beziehungsweise Betriebsprogrammparameter funktionell zugeordnet. Auf diese Weise können in einer Zeile zwei Angaben angezeigt werden, so daß insbesondere bei kurzen Angaben die Zeilen besser genutzt werden und insgesamt weniger Zeilen in der Anzeigeeinrichtung benötigt werden. Wo es von gestalterischem Vorteil ist, kann dadurch außerdem ein symmetrischer Aufbau mit beiderseits angeordneten Bedienelementen gewählt werden.

Vorteilhafterweise ist mit wenigstens einem in Verlängerung einer Zeile angeordneten Bedienelement aus einer vorgegebenen Auswahl an Einstellungsmöglichkeiten für einen Betriebsprogrammparameter beziehungsweise für das Betriebsprogramm eine auswählbar. So können für jeden Betriebsprogrammparameter beziehungsweise für das Betriebsprogramm selbst eine Auswahl an verschiedenen Möglichkeiten zusammengestellt werden, die vom Benutzer durchgeblättert werden können. Bei einem an sich kontinuierlich einstellbaren Parameter, wie beispielsweise der Waschtemperatur oder der Schleuderdrehzahl, können so die einstellbaren Möglichkeiten auf in der Praxis sinnvolle Werte eingeschränkt werden, so daß die Bedienung einfach und schnell ist, da die Bedienperson wenige Einstellungsmöglichkeiten durchblättern muß.

Die Auswahl oder die Einstellung des Betriebsprogramms beziehungsweise der Betriebsprogrammparameter kann durch ein- beziehungsweise mehrmaliges Drücken eines in Verlängerung einer Zeile angeordneten Druckschalters durchgeführt werden. Die Druckschalter können sowohl rastende als auch nicht rastende Druckschalter sein. Letzteren ist dann zweckmäßigerweise ein elektronischer Betätigungsspeicher zugeordnet. Dabei ist auch eine Einstellung durch das Gedrückthalten eines in Verlängerung einer Zeile angeordneten Druckschalters für eine gewisse Zeitdauer denkbar, wobei vorgesehen sein kann, daß während des Gedrückthaltens die verschiedenen Einstellungsmöglichkeiten automatisch durchgeblättert werden, so daß bei Erreichen der gewünschten Einstellungsmöglichkeit zu deren Auswahl der Druckschalter nur noch freigegeben werden muß. Auf diese Weise können auch zahlreiche Einstellungsmöglichkeiten mit einem Schalterdruck durchgeblättert werden, wobei sich die Geschwindigkeit des automatischen Durchblätterns während des Gedrückthaltens des Druckschalters zusätziich erhöhen kann.

Druckschalter lassen sich auch in kleinen Ausführungen gut bedienen und so vorteilhaft auch bei Anordnung in größerer Anzahl auf kleinen Raum einsetzen. Ferner lassen sich Druckschalter insbesondere in rechteckiger Form gestalterisch sehr gut mit einer Anzeigeeinrichtung in rechteckiger Form kombinieren, die sie vorzugsweise besitzen wird.

Der Einsatz von Drehschaltern als Bedienelemente in Verlängerung der Zeilen ist ebenfalls möglich, wobei sich mit diesen die Einstellungsmöglichkeiten sehr schnell und gegebenenfalls auch in beiden möglichen Reihenfolgen durchblättern lassen und daher insbesondere bei zahlreichen Einstellungsmöglichkeiten von Vorteil sind.

Weiterhin ist es möglich, daß ein Betriebsprogrammparameter oder das Betriebsprogramm mit einem in Verlängerung einer Zeile angeordneten Bedienelement zur Einstellung zunächst ausgewählt und mit einem weiteren Bedienelement, insbesondere in Gestalt eines Drehschalters, eingestellt wird. Dieser muß nur einmal vorhanden sein und kann für sämtliche Einstellungen verwendet werden. So lassen sich die Vorteile eines Druckschalters, insbesondere wenig Platz zu benötigen und optisch unaufdringlich zu sein, für die Bedienelemente in Verlängerung der Zeile nutzen, die entsprechend der Zeilenanzahl und der Größe der Anzeigeeinrichtung in größerer Zahl auf kleinem Raum angeordnet werden müssen, und für die Einstellung des Betriebsprogramms oder eines Betriebsprogrammparameters die Vorteile eines Drehschalters nutzen, insbesondere ein rasches Durchblättern in beiden möglichen Reihenfolgen zu ermöglichen.

Zusätzlich kann in wenigstens einer Zeile der Anzeigeeinrichtung eine Bedienfunktion zur Steuerung des Einstellvorgangs angezeigt werden, die mit einem in Verlängerung dieser Zeile neben der Anzeigeeinrichtung angeordneten Bedienelement aktiviert werden kann. Mit dieser Funktion können beispielsweise in einem Fall, in dem in der Anzeigeeinrichtung von einer Auswahl von vorgegebenen Einstellungsmöglichkeiten nur ein Teil gleichzeitig in der Anzeigeeinrichtung angeboten werden können, die restlichen nicht dargestellten Einstellungsmöglichkeiten nacheinander zur Anzeige gebracht werden. Auch ist eine Bedienfunktion denkbar, mittels der man bei einem schrittweisen Einstellvorgang wenigstens einen Schritt zurückgelangen kann, beispielsweise um eine falsche Eingabe zu korrigieren.

Bei jeder Anzeige eines Betriebsprogramms ist es von Vorteil, wenn sich die Auswahl der Einstellungsmöglichkeiten für die übrigen Betriebsprogrammparameter dem eingestellten Betriebsprogramm anpaßt. So kommen beispielsweise im Fall einer Waschmaschine für das Waschen von Buntwäsche hohe Temperaturwerte (über 60°C) nicht in Frage; daher werden beim Einstellen des Betriebsprogramms Buntwäsche hohe Temperaturwerte von der Auswahl der Einstellungsmöglichkeiten für die Waschtemperatur ausgeschlossen. Damit wird insbesondere verhindert, daß Einstellungen vorgenommen werden, die sich widersprechen, und außerdem die Bedienung einfacher und übersichtlicher gestaltet, da jeweils nur die tatsächlich in Frage kommenden Einstellungsmöglichkeiten angeboten werden.

Die individuelle Einstellung und Anzeige eines Betriebsprogramms kann vorteilhafterweise zusammen mit den zusätzlich eingestellten Betriebsprogrammparametern abgespeichert werden. Dazu kann die Abspeicherfunktion als Bedienfunktion in einer Zeile der Anzeigevorrichtung angezeigt werden, bei deren Aktivierung mittels eines in Zeilenverlängerung angeordneten Bedienelements das eingestellte Betriebsprogramm zusammen mit den weiteren Betriebsprogrammparametern abgespeichert wird. Werden beispielsweise verschiedene Betriebsprogramme häufig mit derselben Zuordnung von Parametern wie Temperatur oder Schleuderdrehzahl verwendet, so kann diese Zuordnung der Parameter zum jeweiligen Betriebsprogramm abgespeichert werden, damit bei zukünftigen Einstellvorgängen diese Auswahl eines Betriebsprogramms mit den einmal abgespeicherten Parametern wieder abrufbar ist. Die Möglichkeit zu Änderung dieser Parameter kann jedoch weiter bestehen bleiben.

Zur Anpassung an die persönlichen Anforderungen der Bedienperson kann in der Auswahl der Betriebsprogrammöglichkeiten wenigstens ein kundenspezifisches Betriebsprogramm enthalten sein, dessen weitere Betriebsprogrammparameter eingestellt und für dieses spezifische Betriebsprogramm abgespeichert werden können. So kann die Bedienperson ihr eigenes Betriebsprogramm zusammenstellen, ohne die übrigen Voreinstellungen verändern zu müssen. In einem solchen Fall kann die Bedienvorrichtung so eingerichtet sein, daß nur die Einstellungen des kundenspezifischen Betriebsprogramms verändert abgespeichert werden können und die Einstellungen für die übrigen Betriebsprogramme gegen ein Abspeichern mit veränderten Einstellungen gesichert sind, um zu gewährleisten, daß in jedem Fall sinnvolle vom Werk aus voreingestellte Einstellungen in der Bedienvorrichtung abgespeichert bleiben.

In einer vorteilhaften Ausführungsform werden sämtliche Betriebsprogramme, Betriebsprogrammeinstellungen oder Bedienfunktionen gemeinsam von einer Anzeigeeinrichtung angezeigt. Auf diese Weise werden der Bedienperson sämtliche Informationen übersichtlich gemeinsam in einer Anzeige angeboten. Die Ablesbarkeit und die Gestaltung der Bedienblende läßt sich so wesentlich verbessern. Die Betriebsprogramme, Betriebsprogrammeinstellungen oder Bedienfunktionen werden insbesondere zur besseren Verständlichkeit vorteilhafterweise von einer alphanumerischen Anzeige im Klartext angezeigt.

Die angezeigten Einstellungen können das Betriebsprogramm, die Behandlungstemperatur oder die Schleuderdrehzahl sein. Durch diese ist das Betriebsprogramm in der Regel hinreichend bestimmt, so daß bei Anzeige all dieser Einstellungen die Bedienperson nach deren Überprüfung das Betriebsprogramm meistens bereits starten kann. Zusätzlich kann die eingestellte Start- und/oder Endezeit oder die Programmdauer angezeigt werden. Weiterhin können ebenfalls einstellbare spezielle Zusatzeinstellungen angezeigt werden. Diese können beispielsweise eine Einstellung sein, bei der das Programm in kürzerer Zeit durchlaufen wird, eine Einstellung, bei der mit erhöhter Wassermenge gewaschen wird, oder eine Einstellung, bei der die Wäsche vor dem Waschen erst eingeweicht wird. Ähnliche zusätzliche Einstellungsmöglichkeiten sind bei nahezu allen programmgesteuerten Haushaltgeräten vorhanden, so daß sie vorteilhafterweise mit in die Anzeige aufgenommen werden, um auch diese Einstellungen zusammen mit den anderen einfach und übersichtlich darstellen zu können.

Weitere Einzelheiten, Merkmale und Vorteile der Erfindung ergeben sich aus der folgenden Beschreibung eines Ausführungsbeispiels unter Bezugnahme auf die Zeichnung. Darin zeigen
- Fig. 1: eine perspektivische Ansicht eines mit einer Bedienvorrichtung ausgerüsteten Haushaltgeräts,
- Fig. 2: eine Vorderansicht der Bedienvorrichtung und
- Fig. 3: einen Ausschnitt der Bedienvorrichtung bei verschiedenen Schritten zum Einstellen eines Betriebsprogramms und dessen Betriebsprogrammparametern.

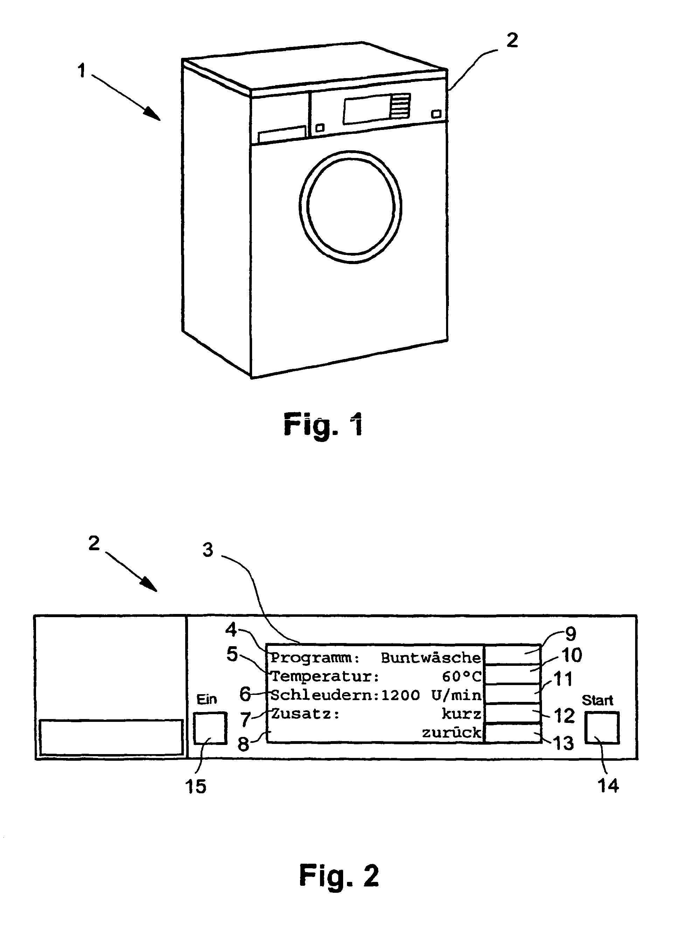

Figur 1 zeigt als programmgesteuertes Haushaltgerät eine Waschmaschine 1, die oben in der Frontfläche eine Bedienvorrichtung 2 aufweist.

In Figur 2 ist rechts neben der Griffplatte einer Waschmittelschublade 16 die Bedienvorrichtung 2 abgebildet, die links einen Einschalter 15 für die Waschmaschine 1 aufweist. Ungefähr in der Mitte der Bedienvorrichtung 2 ist eine Anzeigeeinrichtung 3 in Form eines LCD-Displays angeordnet, auf der ein bereits eingestelltes Betriebsprogramm und die zugehörigen Betriebsprogrammparameter dargestellt sind. Die angezeigten Einstellungen sind im vorliegenden Fall das Betriebsprogramm in Zeile 4, die Waschtemperatur in Zeile 5, die Schleuderdrehzahl in Zeile 6, sowie eine Zusatzeinstellung in Zeile 7. In der untersten Zeile 8 kann eine Bedienfunktion angezeigt werden. In der Abbildung wird die Funktion "zurück" angezeigt, deren Anwahl den gerade gewählten Einstellschritt rücksetzt.

Rechts neben der Anzeigeeinrichtung 3 sind jeweils in optischer Verlängerung der Zeilen 4, 5, 6, 7, 8 mehrere nicht rastende Druckschalter 9, 10, 11, 12, 13 angeordnet, die der jeweiligen Zeile auch funktionell zugeordnet sind und mit denen die dort angezeigten Einstellungen geändert werden können beziehungsweise eine dort angezeigte Bedienfunktion aktiviert werden kann. Die Zuordnung der Druckschalter 9, 10, 11, 12, 13 zu der damit vorzunehmenden Eingabe erfolgt daher auf sinnfällige Weise. Weiterhin ist noch ein Startknopf 14 vorgesehen, mit dem das eingestellte Betriebsprogramm in Gang gesetzt werden kann.

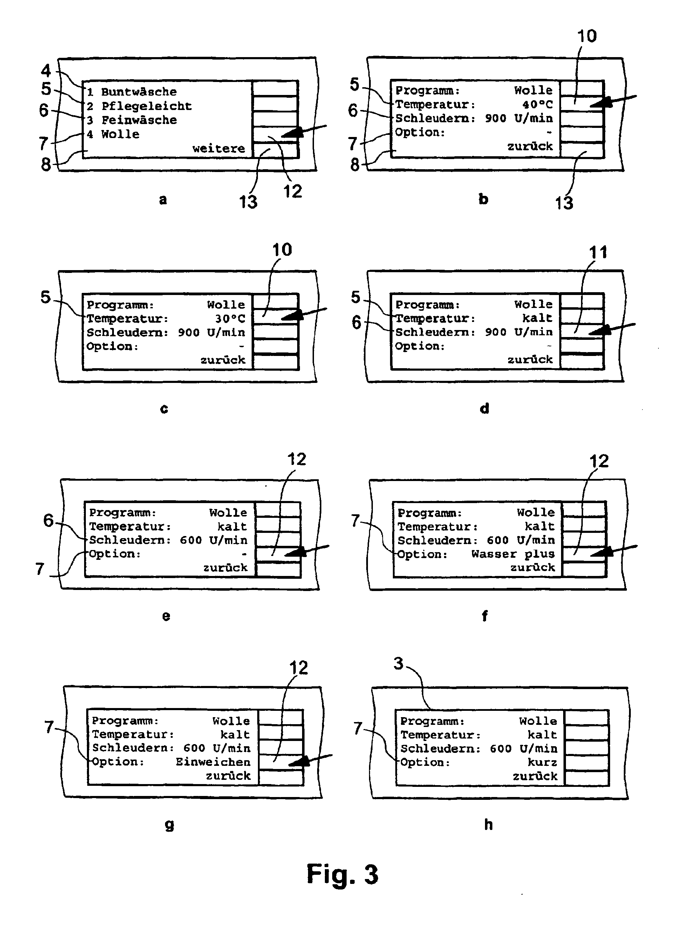

Eine in einer Zeile 4, 5, 6, 7 angezeigte Einstellung wird dadurch geändert, daß der entsprechende rechts daneben angeordnete Druckschalter 9, 10, 11, 12 betätigt wird, wobei bei jeder Betätigung die folgende Einstellungsmöglichkeit aus einer vorgegebenen Auswahl eingestellt und in der entsprechenden Zeile 4, 5, 6, 7 angezeigt wird. Analog dazu wird bei der zeilenweisen Anzeige beispielsweise einer Auswahl mehrerer Möglichkeiten für das Betriebsprogramm - wie in Figur 3 in Bild a dargestellt - das gewünschte Betriebsprogramm durch Betätigen des Druckschalters 9, 10, 11, 12 rechts neben der zugeordneten Zeile 4, 5, 6, 7 ausgewählt. Entsprechendes gilt für angezeigte Parameter und Bedienfunktionen.

In Figur 3 ist in Bildern a bis h jeweils ein Ausschnitt der Bedienvorrichtung 2 mit der Anzeigeeinrichtung 3 und deren Zeilen 4, 5, 6, 7, 8 sowie den Druckschaltern 9, 10, 11, 12, 13 während eines Einstellvorgangs dargestellt. Im vorliegenden Beispiel ist der Einstellvorgang eines ungewöhnlichen und unter normalen Umständen umständlich einzustellenden Betriebsprogramms beschrieben, bei dem empfindliche Wolle mit kaltem Wasser gewaschen und nach dem Waschvorgang mit niedriger Drehzahl geschleudert werden soii, wobei der Waschvorgang zeitlich verkürzt werden soll, um das Gestrick zu schonen.

In Bild a ist die Anzeigeeinrichtung 3 nach dem Einschalten der Waschmaschine 1 mittels des Schalters 15 dargestellt. Zu diesem Zeitpunkt werden in den obersten vier Zeilen 4, 5, 6 und 7 der Anzeigeeinrichtung 3 eine Auswahl besonders häufig benötigter, voreingestellter Betriebsprogramme angezeigt, um bei einem gewöhnlichen Programmwunsch die vorzunehmenden Einstellungen auf ein Minimum zu begrenzen. In der untersten Zeile 8 wird die Funktion "weitere" angezeigt, bei deren Anwahl durch Betätigung des Druckschalters 13 in den obersten vier Zeilen 4, 5, 6, 7 eine Auswahl von weiteren vier Betriebsprogrammen angezeigt wird.

Unter den im vorliegenden Beispiel bereits zu Beginn angebotenen Betriebsprogrammen befindet sich in der vierten Zeile 7 in Bild a das Betriebsprogramm für Wolle, das durch Betätigen des zugeordneten Druckschalters 12 ausgewählt wird. Nach erfolgter Auswahl wird gemäß Bild b in der ersten Zeile 4 das gewünschte Betriebsprogramm "Wolle" angezeigt, wobei für das Betriebsprogramm in Zeile 4 diesem Programm zugeordnete Betriebsprogrammparameter in den Zeilen 5, 6, 7 angezeigt werden, deren zulässige Einstellungsmöglichkeiten jedoch an das eingestellte Betriebsprogramm angepaßt sind. So sind im vorliegenden Fall die Auswahlmöglichkeiten für die Temperatur- und Schleuderdrehzahleinstellungen auf kleine Werte begrenzt, da Wolle empfindlich ist und nicht bei hohen Temperaturen gewaschen oder bei hohen Drehzahlen geschleudert werden sollte. In Bild b werden somit als Waschtemperatur in der Zeile 5 nur 40° C und als Schleuderdrehzahl in der Zeile 6 nur 900 U/min angezeigt. Da für "Wolle" in der Regel keine Zusatzeinstellung erforderlich ist, wird in diesem Ausführungsbeispiel in der Zeile 7 keine solche angeboten.

Das Einstellen der in Bild b und c in der zweiten Zeile 5 angezeigten Waschtemperatur erfolgt mit dem Druckschalter 10. Nach einmaligem Betätigen des Schalters 10 ist gemäß Bild c die Waschtemperatur in Zeile 5 auf die nächste Einstellungsmöglichkeit 30° C abgestuft. Nach nochmaliger Schalter-Betätigung wird der in Bild d gezeigte Zustand erreicht: Anzeige "kalt" für den Temperaturwert in Zeile 5. Analog dazu erfolgt das Einstellen der Schleuderdrehzahl mit dem zugeordneten Druckschalter 11. Durch dessen Betätigen wird gemäß Bild e die Einstellung "900 U/min" für die Schleuderdrehzahl in der Zeile 6 zur gewünschten Einstellung "600 U/min" weitergeschaltet.

Entsprechend wird die optionale Zusatzeinstellung "kurz" mit dem Druckschalter 12 eingestellt. Durch dessen erste Betätigung wird der Zustand gemäß Bild f erreicht, nach dem in Zeile 7 als erste Einstellungsmöglichkeit "Wasser plus" angeboten wird. Nochmaliges Betätigen des Druckschalters 12 zeigt gemäß Bild g die Funktion "Einweichen" und nach einer weiteren Betätigung gemäß Bild h die gewünschte Funktion "kurz". Die gewünschte Funktion "kurz" wurde daher auf einfache Weise durch dreimaliges Betätigen des Druckschalters 12 eingestellt.

Nach Zusammenstellung des gewünschten Betriebsprogramms kann es mit dem Startschalter 14 in Gang gesetzt werden.

Abweichend von den dargestellten Ausführungsbeispielen können die Betriebsprogramme und/oder die Betriebsprogrammparameter in allen oder nur einem Teil der Zeilen sowohl am Anfang der Zeile wie auch an deren Ende angezeigt werden. Dann sind zu ihrer Einstellung funktionell entsprechend zugeordnete Bedienelemente rechts und links der Anzeigeeinrichtung in Verlängerung der jeweiligen Zeilen angeordnet.

## Patentansprüche

1. Verfahren zum Einstellen eines Betriebsprogramms aus mehreren Betriebsprogrammparametem eines programmgesteuerten Haushaltgeräts (1) mit
- einer Anzeigeeinrichtung (3) mit wenigstens einer Zeile (4, 5, 6, 7, 8), in der am Anfang und/oder am Ende ein Betriebsprogramm oder ein Betriebsprogrammparameter angezeigt wird,
- wenigstens einem Bedienelement (9, 10, 11, 12, 13) zum Einstellen des Betriebsprogramms beziehungsweise eines Betriebsprogrammparameters, und
- ein in einer Zeile (4, 5, 6, 7, 8) angezeigtes Betriebsprogramm mit einem in Verlängerung dieser Zeile links oder rechts neben der Anzeigeeinrichtung (3) angeordneten Bedienelement (9, 10, 11, 12, 13) ausgewählt wird,
- sämtliche angezeigten Betriebsprogramme und Betriebsprogrammparameter oder Bedienfunktionen gemeinsam von der einen Anzeigeeinrichtung (3) angezeigt werden können und
- ein in einer Zeile (4, 5, 6, 7, 8) angezeigter Betriebsprogrammparameter mit einem in Verlängerung dieser Zeile links oder rechts neben der Anzeigeeinrichtung (3) angeordneten Bedienelement (9, 10, 11, 12, 13) eingestellt wird,
**dadurch gekennzeichnet, daß** die Auswahl beziehungsweise die Einstellung durch ein- beziehungsweise mehrmaliges Drücken eines in Verlängerung einer Zeile (4, 5, 6, 7) angeordneten Druckschalters (9, 10, 11, 12) getroffen wird und
die Einstellung durch Gedrückthalten eines in Verlängerung einer Zeile (4, 5, 6, 7) angeordneten Druckschalters (9, 10, 11, 12) für eine gewissen Zeitdauer getroffen wird, wobei während des Gedrückthaltens die verschiedenen Einstellmöglichkeiten automatisch durchgeblättert werden, so dass bei Erreichen der gewünschten Einstellmöglichkeit zuderen Auswahl der Druckschalter (9, 10, 11, 12) freigegeben werden muss.

2. Verfahren zum Einstellen eines Betriebsprogramms aus mehreren Betriebsprogrammparametem eines programmgesteuerten Haushaltgeräts (1) mit
- einer Anzeigeeinrichtung (3) mit wenigstens einer Zeile (4, 5, 6, 7, 8), in der am Anfang und/oder am Ende ein Betriebsprogramm oder ein Betriebsprogrammparameter angezeigt wird,
- wenigstens einem Bedienelement (9, 10, 11, 12, 13) zum Einstellen des Betriebsprogramms beziehungsweise eines Betriebsprogrammparameters, und wobei
- ein in einer Zeile (4, 5, 6, 7, 8) angezeigtes Betriebsprogramm mit einem in Verlängerung dieser Zeile links oder rechts neben der Anzeigeeinrichtung (3) angeordneten Bedienelement (9, 10, 11, 12, 13) ausgewählt wird,
- sämtliche angezeigten Betriebsprogramme und Betriebsprogrammparameter oder Bedienfunktionen gemeinsam von der einen Anzeigeeinrichtung (3) angezeigt werden können,
- ein in einer Zeile (4, 5, 6, 7, 8) angezeigter Betriebsprogrammparameter mit einem in Verlängerung dieser Zeile links oder rechts neben der Anzeigeeinrichtung (3) angeordneten Bedienelement (9, 10, 11, 12, 13) eingestellt wird und
- ein Betriebsprogrammparameter oder das Betriebsprogramm mit einem in Verlängerung einer Zeile (4, 5, 6, 7, 8) angeordneten Bedienelement (9, 10, 11, 12, 13) zur Einstellung ausgewählt wird,

3. Verfahren nach Anspruch 1 oder 2, **dadurch gekennzeichnet, dass** mit wenigstens einem in Verlängerung einer Zeile (4, 5, 6, 7, 8) angeordneten Bedienelement (9, 10, 11, 12, 13) aus einer vorgegebenen Auswahl an Einstellungsmöglichkeiten für einen Betriebsprogrammparameter beziehungsweise für das Betriebsprogramm eine Einstellungsmöglichkeit ausgewählt wird.

4. Verfahren nach einem der Ansprüche 1 bis 3, **dadurch gekennzeichnet, dass** in wenigstens einer Zeile (8) der Anzeigeeinrichtung (3) eine Bedienfunktion zur Steuerung des Einstellvorgangs angezeigt wird, die mit einem in Verlängerung dieser Zeile (8) neben der Anzeigeeinrichtung angeordneten Bedienelement (13) aktiviert werden kann.

5. Verfahren nach Anspruch 4, **dadurch gekennzeichnet, dass** mittels der Bedienfunktion bei der Anzeige eines Teils einer Auswahl von Einstellungsmöglichkeiten für das Betriebsprogramm oder einen Betriebsprogrammparameter Einstellungsmöglichkeiten des nicht angezeigten Teils zur Anzeige gebracht werden können.

6. Verfahren nach Anspruch 4, **dadurch gekennzeichnet, dass** man mittels der Bedienfunktion in einem schrittweisen Einstellvorgang wenigstens einen Einstellschritt rückwärts schalten kann.

7. Verfahren nach einem der Ansprüche 1 bis 6, **dadurch gekennzeichnet, dass** von der Anzeigeeinrichtung (3) das eingestellte Betriebsprogramm angezeigt wird und nur die für dieses Betriebsprogramm zulässigen Betriebsprogrammparameter als Auswahl von Einstellungsmöglichkeiten angeboten werden.

8. Verfahren nach einem der Ansprüche 1 bis 7, **dadurch gekennzeichnet, dass** von der Anzeigeeinrichtung (3) das eingestellte Betriebsprogramm angezeigt wird und dieses zusammen mit weiteren Betriebsprogrammparametem abgespeichert werden kann.

9. Verfahren nach einem der Ansprüche 1 bis 8, **dadurch gekennzeichnet, dass** von der Anzeigeeinrichtung (3) das eingestellte Betriebsprogramm angezeigt wird und die Auswahl der Einstellungsmöglichkeiten für das Betriebsprogramm wenigstens ein kundenspezifisches Betriebsprogramm enthält, dessen weitere Betriebsprogrammparameter einstellbar und für dieses kundenspezifische Betriebsprogramm abgespeichert werden kann.

10. Verfahren nach einem der Ansprüche 1 bis 9, **dadurch gekennzeichnet, dass** sämtliche angezeigten Betriebsprogramme, Betriebsprogrammeinstellungen oder Bedienfunktionen gemeinsam von einer Anzeigeeinrichtung (3) angezeigt werden.

11. Verfahren nach einem der Ansprüche 1 bis 10, **dadurch gekennzeichnet, dass** die Betriebsprogramme, Betriebsprogrammeinstellungen oder Bedienfunktionen im Klartext angezeigt werden.

## Claims

1. Method of setting an operating program from several operating program parameters of a program-controlled domestic appliance (1), with
- a display device (3) with at least one line (4, 5, 6, 7, 8) in which an operating program or an operating program parameter is displayed at the beginning and/or end,
- at least one control element (9, 10, 11, 12, 13) for setting the operating program or an operating program parameter, and
- an operating program displayed in a line (4, 5, 6, 7, 8) is selected by a control element (9, 10, 11, 12, 13) arranged in prolongation of this line to the left or the right adjacent to the display device (3),
- all displayed operating programs and operating program parameters or control functions can be displayed in common by the one display device (3) and
- an operating program parameter displayed in a line (4, 5, 6, 7, 8) is set by a control element (9, 10, 11, 12, 13) arranged in prolongation of this line to the left or the right adjacent to the display device (3),
**characterised in that** the selection or setting is carried out by a single or multiple pressing of a press switch 9, 10, 11, 12) arranged in prolongation of a line (4, 5, 6, 7) and the setting is carried out by keeping pressed a press switch (9, 10, 11, 12), which is arranged in prolongation of a line (4, 5, 6, 7) for a specific period of time, wherein during the keeping pressed the different setting possibilities are automatically leafed through so that on attainment of the desired setting possibility the press switch (9, 10, 11, 12) is to be released for selection thereof.

2. Method of setting an operating program from several operating program parameters of a program-controlled domestic appliance (1), with
- a display device (3) with at least one line (4, 5, 6, 7, 8) in which an operating program or an operating program parameter is displayed at the beginning and/or end,
- at least one control element (9, 10, 11, 12, 13) for setting the operating program or an operating program parameter, and wherein
- an operating program displayed in a line (4, 5, 6, 7, 8) is selected by a control element (9, 10, 11, 12, 13) arranged in prolongation of this line to the left or the right adjacent to the display device (3),
- all displayed operating programs and operating program parameters or control functions can be displayed in common by the one display device (3),
- an operating program parameter displayed in a line (4, 5, 6, 7, 8) is set by a control element (9, 10, 11, 12, 13) arranged in prolongation of this line to the left or the right adjacent to the display device (3)
- an operating program parameter on the operating program is selected by a control element (9, 10, 11, 12, 13), which arranged in prolongation of a line (4, 5, 6, 7, 8), for the setting,
**characterised in that**
- the operating program parameter or the operating program is set by a further control element in the form of a rotary switch.

3. Method according to claim 1 or 2, **characterised in that** a setting possibility is selected by at least one control element (9, 10, 11, 12, 13), which is arranged in prolongation of a line (4, 5, 6, 7, 8), from a predetermined selection of setting possibilities for an operating program parameter or for the operating program.

4. Method according to one of claims 1 to 3, **characterised in that** a control function for control of the setting process is displayed in at least one line (8) of the display device (3) and can be activated by a control element (13) arranged in prolongation of this line (8) adjacent to the display device.

5. Method according to claim 4, **characterised in that**, in the case of display of a part of a selection of setting possibilities for the operating program or an operating program parameter, setting possibilities of the part which is not displayed can be displayed by means of the control function.

6. Method according to claim 4, **characterised in that** at least one setting step can be switched backwards by means of the control function in a step-by-step setting process.

7. Method according to one of claims 1 to 6, **characterised in that** the set operating program is displayed by the display device (3) and only the operating program parameters permissible for this operating program are offered as a selection of setting possibilities.

8. Method according to one of claims 1 to 7, **characterised in that** the set operating program is displayed by the display device (3) and this can be stored together with further operating program parameters.

9. Method according to one of claims 1 to 8, **characterised in that** the set operating program is displayed by the display device (3) and contains the selection of setting possibilities for the operating program of at least one customer-specific operating program, the further operating program parameters of which are settable and can be stored for this customer-specific operating program.

10. Method according to one of claims 1 to 9, **characterised in that** all displayed operating programs, operating program settings or control functions are displayed in common by one display device (3).

11. Method according to one of claims 1 to 10, **characterised in that** the operating programs, operating program settings or control functions are displayed in plain text.

## Revendications

1. Procédé pour régler un programme de fonctionnement à partir de plusieurs paramètres du programme de fonctionnement d'un appareil domestique (1) commandé par programme et comprenant
- un dispositif d'affichage (3) à au moins une ligne (4, 5, 6, 7, 8) dans laquelle s'affiche, au début et/ou à la fin, un programme de fonctionnement ou un paramètre du programme de fonctionnement,
- au moins un élément de commande (9, 10, 11, 12, 13) pour régler le programme de fonctionnement ou un paramètre du programme de fonctionnement,
et dans lequel
- un programme de fonctionnement affiché dans une ligne (4, 5, 6, 7, 8) est sélectionné à l'aide d'un élément de commande (9, 10, 11, 12, 13) placé dans le prolongement de cette ligne à gauche ou à droite du dispositif d'affichage (3),
- tous les programmes de fonctionnement et paramètres des programmes de fonctionnement ou fonctions de commande affichés peuvent être affichés conjointement par ledit un dispositif d'affichage (3) et
- un paramètre du programme de fonctionnement affiché dans une ligne (4, 5, 6, 7, 8) est réglé à l'aide d'un élément de commande (9, 10, 11, 12, 13) placé dans le prolongement de cette ligne à gauche ou à droite du dispositif d'affichage (3),
**caractérisé en ce qu'**on opère la sélection ou le réglage en appuyant une ou plusieurs fois sur un actionneur à pression (9, 10, 11, 12) placé dans le prolongement d'une ligne (4, 5, 6, 7) et **en ce qu'**on opère le réglage en maintenant appuyé pendant un certain temps un actionneur à pression (9, 10, 11, 12) placé dans le prolongement d'une ligne (4, 5, 6, 7), pendant ledit maintien appuyé les différentes options de réglage étant parcourues automatiquement de sorte que lorsqu'on atteint l'option de réglage voulue, on doit relâcher l'actionneur à pression (9, 10, 11, 12) pour la sélectionner.

2. Procédé pour régler un programme de fonctionnement à partir de plusieurs paramètres du programme de fonctionnement d'un appareil domestique (1) commandé par programme et comprenant
- un dispositif d'affichage (3) à au moins une ligne (4, 5, 6, 7, 8) dans laquelle s'affiche, au début et/ou à la fin, un programme de fonctionnement ou un paramètre du programme de fonctionnement,
- au moins un élément de commande (9, 10, 11, 12, 13) pour régler le programme de fonctionnement ou un paramètre du programme de fonctionnement,
et dans lequel
- un programme de fonctionnement affiché dans une ligne (4, 5, 6, 7, 8) est sélectionné à l'aide d'un élément de commande (9, 10, 11, 12, 13) placé dans le prolongement de cette ligne à gauche ou à droite du dispositif d'affichage (3),
- tous les programmes de fonctionnement et paramètres des programmes de fonctionnement ou fonctions de commande affichés peuvent être affichés conjointement par ledit un dispositif d'affichage (3),
- un paramètre du programme de fonctionnement affiché dans une ligne (4, 5, 6, 7, 8) est réglé à l'aide d'un élément de commande (9, 10, 11, 12, 13) placé dans le prolongement de cette ligne à gauche ou à droite du dispositif d'affichage (3) et
- un paramètre du programme de fonctionnement ou le programme de fonctionnement est sélectionné en vue du réglage à l'aide d'un élément de commande (9, 10, 11, 12, 13) placé dans le prolongement d'une ligne (4, 5, 6, 7, 8),
**caractérisé en ce qu'**on règle le paramètre du programme de fonctionnement ou le programme de fonctionnement à l'aide d'un autre élément de commande sous forme d'un actionneur rotatif.

3. Procédé selon la revendication 1 ou 2, **caractérisé en ce qu'**on choisit une option de réglage parmi une sélection prédéfinie d'options de réglage pour un paramètre du programme de fonctionnement ou pour le programme de fonctionnement à l'aide d'au moins un élément de commande (9, 10, 11, 12, 13) placé dans le prolongement d'une ligne (4, 5, 6, 7, 8).

4. Procédé selon l'une des revendications 1 à 3, **caractérisé en ce qu'**une fonction de commande pour contrôler l'opération de réglage s'affiche dans au moins une ligne (8) du dispositif d'affichage (3) et peut être activée à l'aide d'un élément de commande (13) placé dans le prolongement de cette ligne (8) à côté dudit dispositif d'affichage.

5. Procédé selon la revendication 4, **caractérisé en ce qu'**à l'aide de la fonction de commande, lorsque s'affiche une partie d'une sélection d'options de réglage pour le programme de fonctionnement ou un paramètre du programme de fonctionnement, on peut afficher des options de réglage de la partie non affichée.

6. Procédé selon la revendication 4, **caractérisé en ce qu'**à l'aide de la fonction de commande, pendant une opération de réglage par étapes, on peut faire revenir en arrière au moins une étape de réglage.

7. Procédé selon l'une des revendications 1 à 6, **caractérisé en ce que** le programme de fonctionnement réglé est affiché par le dispositif d'affichage (3) et **en ce que** seuls les paramètres admis pour ce programme de fonctionnement sont proposés comme sélection d'options de réglage.

8. Procédé selon l'une des revendications 1 à 7, **caractérisé en ce que** le programme de fonctionnement réglé est affiché par le dispositif d'affichage (3) et **en ce qu'**il peut être mémorisé ensemble avec d'autres paramètres dudit programme de fonctionnement.

9. Procédé selon l'une des revendications 1 à 8, **caractérisé en ce que** le programme de fonctionnement réglé est affiché par le dispositif d'affichage (3) et **en ce que** la sélection des options de réglage pour ledit programme de fonctionnement comporte au moins un programme de fonctionnement personnalisé dont les autres paramètres peuvent être réglés et mémorisés pour ce programme de fonctionnement personnalisé.

10. Procédé selon l'une des revendications 1 à 9, **caractérisé en ce que** tous les programmes de fonctionnement, réglages des programmes de fonctionnement ou fonctions de commande affichés sont affichés conjointement par un dispositif d'affichage (3).

11. Procédé selon l'une des revendications 1 à 10, **caractérisé en ce que** les programmes de fonctionnement, réglages des programmes de fonctionnement ou fonctions de commande sont affichés en texte en clair.
